# EUROPÄISCHE PATENTSCHRIFT

(11) **EP 0 723 923 B1**
(45) Veröffentlichungstag und Bekanntmachung des Hinweises auf die Patenterteilung: **28.10.1998**
(21) Anmeldenummer: 96810041.2
(22) Anmeldetag: 19.01.1996
(51) Int. Cl.: B65G 47/96, B65G 47/38

(54) **Fördereinrichtung mit schwenkbaren Lastträgern**
Conveyor with tiltable load carriers
Convoyeur avec porte-charges basculant

(30) Priorität: 27.01.1995 CH 224/95
(43) Veröffentlichungstag der Anmeldung: 31.07.1996
(73) Patentinhaber: GRAPHA-HOLDING AG, 6052 Hergiswil (CH)
(72) Erfinder: Maier, Willi, CH-8302 Kloten (CH); Schuhmacher, Hans, CH-8172 Niederglatt (CH)

(56) Entgegenhaltungen:
- EP-A- 0 540 464
- FR-A- 2 373 464
- FR-A- 2 530 501

## Beschreibung

Die Erfindung betrifft eine Fördereinrichtung mit schwenkbaren Lastträgern, die längs einer endlosen Bahn verfahrbar und an wenigstens einer Entladestation entladbar sind, mit wenigstens zwei an der Entladestation angeordneten Schaltorganen, die einzeln zwischen einem inaktiven und einem aktiven Zustand schaltbar sind. Die Erfindung betrifft zudem eine Verwendung dieser Einrichtung.

Eine Fördereinrichtung dieser Art ist durch die EP - A - 540 464 bekannt geworden. Die Lastträger sind Wagen, die jeweils zwei hintereinander angeordnete Schalen aufweisen, die an einer Entladestation miteinander oder einzeln kippbar sind. An einer Beschickungsstation wird auf einem der Wagen ein Paket aufgeladen, und zwar je nach Grösse des Pakets auf beiden Schalen dieser Wagen oder nur auf eine von diesen. Zum Kippen der Schalen sind an der Entladestation zwei in Fahrrichtung hintereinander angeordnete Schaltorgane angebracht, die mittels eines Pneumatikzylinders jeweils zwischen einer aktiven und einer inaktiven Stellung verschwenkbar sind. Die beiden Schaltorgane haben denselben Abstand zueinander.

Beim Endladen werden in der Regel Stückgüter auf eine weitere Fördereinrichtung, beispielsweise ein Band seitlich in einem bogenförmigen Verlauf abgegeben. Der Weg der Stückgüter während des Entladevorganges ist insbesondere abhängig vom Gewicht der Stückgüter, das beispielsweise bei Postpaketen oder Konsumgütern sehr unterschiedlich sein kann. Die bogenförmigen Wege der Stückgüter beim Entladen sind somit sehr unterschiedlich. Dies hat zur Folge, dass beispielsweise ein zu beladendes Stauband vergleichsweise breit ausgelegt werden muss, damit beispielsweise auch sehr leichte Stückgüter, die mit einem vergleichsweise weiten Bogen abgegeben werden, auf das Stauband gelangen.

Der Erfindung liegt die Aufgabe zugrunde, eine Fördereinrichtung der genannten Gattung zu schaffen, die eine präzisere Abgabe unterschiedlicher Stückgüter ermöglicht, und die dennoch kostengünstig herstellbar und funktionssicher ist.

Diese Aufgabe ist durch einer Fördereinrichtung nach Anspruch 1 gelöst. Durch ein Versetzen der beiden Teile in der Längsrichtung der Bahn ist es möglich, bei einem besonders leichten Stückgut die Kippbewegung zum Entladen früher auszulösen. Werden beide Schaltorgane in einen aktiven Zustand geschaltet, so können gleichzeitig zwei Lastträger oder zwei Tragschalen eines Lastträgers gekippt werden. Sehr lange Pakete können damit auf zwei Lastträger oder zwei Tragschalen eines Lastträgers gegeben und entladen werden. Die Erfindung gewährleistet somit ein besser kontrolliertes und präziseres Entladen sehr unterschiedlicher Stückgüter. Die erfindungsgemässe Vorrichtung eignet sich insbesondere zum Füllen von wenigstens einem Stauband mit Stückgütern. Durch die bessere Kontrolle des Entladevorganges kann ein solches Stauband mit unterschiedlichen Stückgütern präziser und damit mit dichterer Anordnung beladen werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch eine Teilansicht einer erfindungsgemässen Fördereinrichtung,
- Fig. 2: eine weitere schematische Teilansicht der erfindungsgemässen Fördereinrichtung sowie eine Teilansicht eines Staubandes,
- Fig. 3: eine weitere schematische Teilansicht der Fördereinrichtung,
- Fig. 4: schematisch ein geteiltes Schaltorgan, und
- Fig. 5: schematisch die verschiedenen Schaltstellungen des geteilten Schaltorgans.

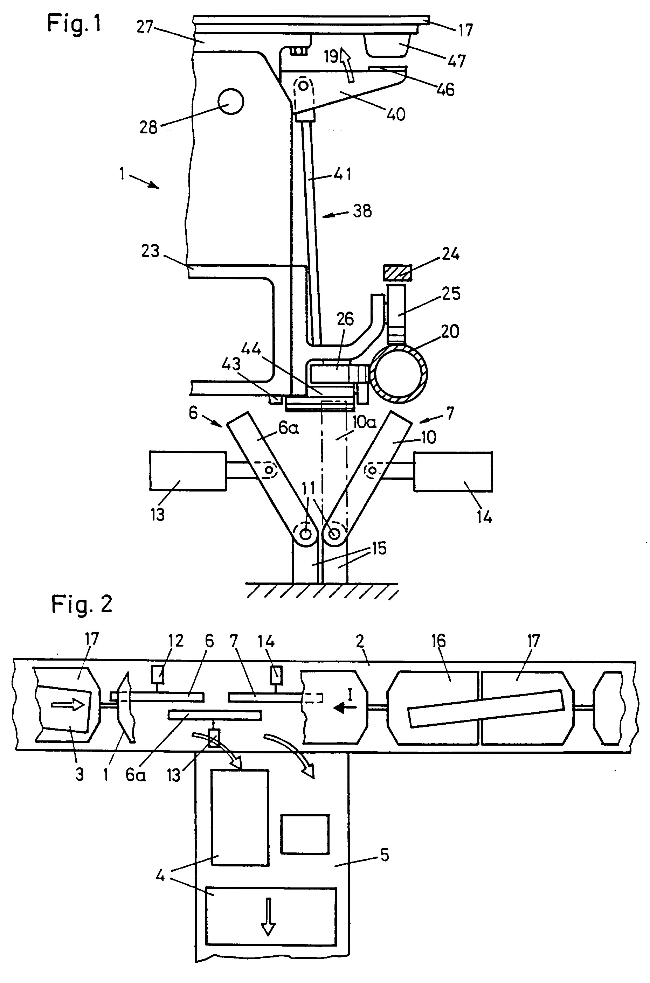

Die Figur 1 zeigt die Hälfte eines Wagens 1, der an sich wie in der EP - A - 540 464 beschrieben, ausgebildet ist. Der Wagen 1 ist in Richtung des Pfeiles I der Figur 2 dargestellt. Von den beiden parallelen rohrförmigen Schienen 20 ist in Figur 1 lediglich die eine gezeigt. Auf diesen Schienen 20 ist der Wagen 1 mit Rollen 25 abgestützt und mit Führungsrollen 26 geführt. Ueber den Rollen 25 kann an Entladestationen jeweils eine Führungsschiene 24 angebracht sein, die beim Einwirken dynamischer Kräfte auf den Wagen 1 ein Kippen verhindert.

An einem Wagenkörper 23 ist ein Schalenträger 27 angebracht, an dem in Fahrrichtung gesehen hintereinander zwei Schalen 16 und 17 schwenkbar gelagert sind. Zum Lösen einer hier nicht gezeigten Verriegelung und zum Verschwenken der Schalen 16 und 17 sind am Wagen zwei Betätigungsorgane 38 angebracht, wobei jeder Schale 16 bzw. 17 ein Betätigungsorgan 38 zugeordnet ist. Die Betätigungsorgane 38 besitzen jeweils einen Betätigungshebel 40, der auf einer Achse 28 gelagert ist und an dem eine Schubstange 41 angelenkt ist. Am unteren Ende ist die Schubstange 41 drehbar mit einem Arm 43 verbunden, der schwenkbar am Körper 23 befestigt ist. An diesem Arm 43 ist seitlich eine Betätigungsrolle 44 gelagert. Wird die Betäti-gungsrolle 44 angehoben, so wird die Schubstange 41 mitgenommen und verschwenkt den Betätigungshebel 40 in Richtung des Pfeils 19. Gleichzeitig wird die Schale 16 bzw. 17 entriegelt und um die Achse 28 verschwenkt, wobei eine Scheibe 46 gegen einen Gummipuffer 47 schlägt.

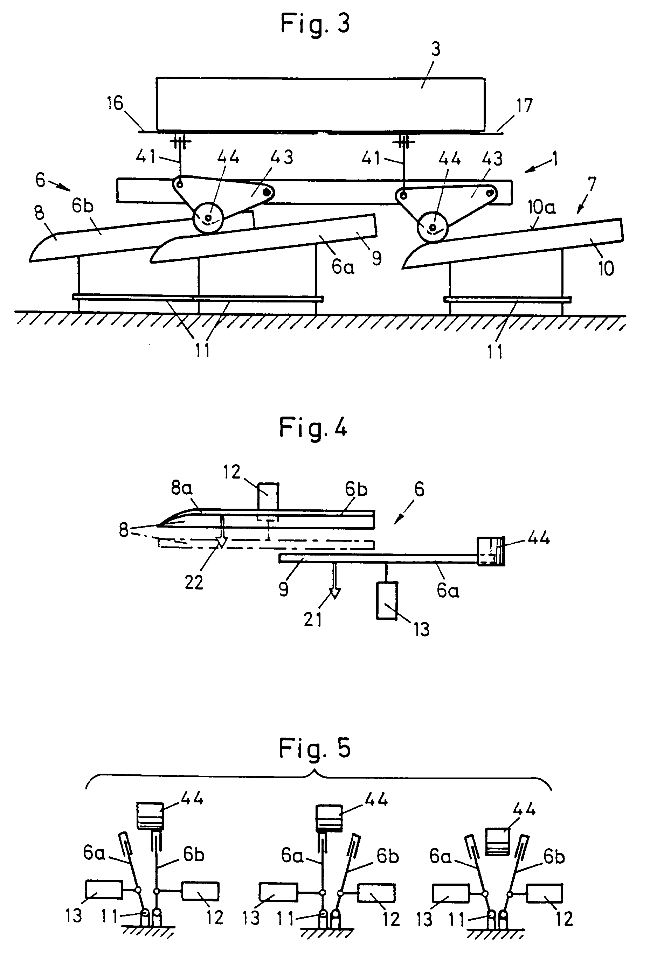

Zum Anheben der Betätigungsrollen 44 sind gemäss Figur 3 in Fahrrichtung gesehen hintereinander zwei Schaltorgane 6 und 7 angeordnet. Diese Organe befinden sich an einer Entladestation beispielsweise bei einem Stauband 5 gemäss Figur 2. Ein in Fahrrichtung gesehen hinteres Schaltorgan 7 besitzt eine Kulisse 10, die mittels eines pneumatischen Zylinders 14 um eine an einem Träger 15 angeordnete Achse 11 verschwenkbar ist. In der Figur 1 ist die inaktive Stellung der Kulisse 10 mit ausgezogenen Linien und die aktive Stellung mit gestrichelten Linien angedeutet. In der aktiven Stellung läuft bei entsprechender Position des Wagens 1 entlang der Bahn 2 eine Rolle 44 auf eine ansteigende Steuerkurve 10a der Kulisse 10 auf, wie dies in Figur 3 angedeutet ist. Die Betätigungsrolle 44 wird dadurch nach oben angehoben und der Arm 43 verschwenkt und die am Arm 43 angelenkte Schubstange 41 nach oben bewegt. In an sich bekannter Weise wird dadurch die entsprechende Schale 16 bzw. 17 entriegelt und verschwenkt.

Das zweite Schaltorgan 6 ist geteilt oder doppelt ausgebildet und weist zwei Kulissen 8 und 9 auf, die einzeln jeweils mit einem Pneumatikzylinder 12 bzw. 13 oder einem ähnlichen Antrieb um eine Achse 11 zwischen jeweils einer aktiven und einer inaktiven Stellung verschwenkbar sind. Die Figur 4 zeigt die Kulisse 9 in der aktiven Stellung. Die eingezeichnete Betäti-gungsrolle 44 befindet sich am Ende der Kulisse 9 in angehobener Position. In die inaktive Stellung wird die Kulisse 9 in Richtung des Pfeiles 21 mittels des Pneumatikzylinders 13 verschwenkt. Die Kulisse 8 ist in der inaktiven Stellung gezeigt. Die Steuerkurve 8a der Kulisse 8 befindet sich ausserhalb der Bahn der Betätigungsrollen 44. In die gestrichelt gezeigte aktive Stellung wird die Kulisse 8 in Richtung des Pfeiles 22 mittels des pneumatischen Zylinders 12 verschwenkt. Das Schaltorgan 6 besteht somit aus zwei Teilen 6a und 6b, die unabhängig voneinander in eine aktive Stellung bezüglich der Bahn einer Führungsrolle 44 verschwenkbar sind.

Die Figur 5 zeigt die drei verschiedenen Stellungen des Schaltorgans. Die beiden Teile 6a und 6b sind in Fahrrichtung gesehen im Abstand zueinander hintereinander angeordnet. Wird eine Rolle 44 mit dem vorderen Teil 6b angehoben, so wird die Kippbewegung früher ausgelöst als beim Anheben der Rolle 44 mittels des Teils 6a. Vorzugsweise ist ein Teil 6a oder 6b in Längsrichtung der Bahn 2 verschiebbar angeordnet, so dass der Zeitpunkt der Auslösung stufenlos einstellbar ist.

Die in Figur 3 gezeigten beiden Kulissen 9 und 10 sind vorzugsweise fest montiert, während die Kulisse 8 verschiebbar montiert ist. Der Abstand zwischen den Kulissen 9 und 10 ist somit fest und darauf eingestellt, einen Wagen 1 mit zwei Schalten 16 und 17 zur Abgabe eines überlangen Pakets 3 zu entladen. Die beiden Schalen 16 und 17 können dann im wesentlichen gleichzeitig mit zwei in aktiven Positionen befindlichen Kulissen 9 und 10 zum Entladen verschwenkt werden. Werden mit dem Wagen 1 zwei einzelne Stückgüter auf den Schalen 16 und 17 transportiert, so werden diese vorzugsweise mittels den Kulissen 8 und 9 entladen. Mit der früheren Auslösung der beiden Schalen durch die Kulissen 8 und 9 wird die bezüglich eines überlangen Paketes 3 weitere Bahn leichter Pakete berücksichtigt. Ein überlanges Paket kann somit entsprechend seiner engeren Abwurfbahn mit den Kulissen 9 und 10 entsprechend später entladen werden.

In der Grundstellung sind vorzugseise sämtliche Kulissen 8, 9 und 10 in der inaktiven Stellung und somit nach aussen verschwenkt. Der Weg zum Verschwenken der Kulissen in die aktive Stellung ist wie ersichtlich sehr kurz, weshalb sehr schnell geschaltet werden kann, was entsprechend eine hohe Fördergeschwindigkeit erlaubt. Wesentlich ist auch, dass die Last, die jeweils von einer anzuhebenden Rolle 44 auf eine Kulisse 8, 9 bzw. 10 wirkt, die entsprechende Achse 11 und nicht die entsprechenden Zylinder 12, 13 bzw. 14 belastet.

Nach einer Weiterbildung der Erfindung ist wenistens eine der Kulissen 8, 9 oder 10 in ihrer Neigung verstellbar. Die Verstellung kann beispielsweise ebenfalls mit hier nicht gezeigten pneumatischen Zylindern erfolgen. Dies ermöglicht, die Schwenkgeschwindigkeit einzustellen und damit einen besonders sanften oder einen sehr schnellen Abwurf zu erhalten.

Denkbar ist auch eine Ausführung, bei der die Kulissen 8, 9 und 10 nicht verschwenkt, sondern seitlich verschoben werden. Für den Fachmann ist klar, dass die Rollen 44 und die Kulissen 8, 9 und 10 vertauscht sein können.

## Patentansprüche

1. Fördereinrichtung mit um eine in Förderrichtung verlaufende Achse schwenkbaren Lastträgern (1), die längs einer endlosen Bahn (2) verfahrbar und an Wenigstens einer Entladestation entladbar sind, mit Wenigstens einem an der Entladestation angeordneten Schaltorgan (6), das zur Betätigung der Lastträger zwischen einem inaktiven und einem aktiven Zustand schaltbar ist, dadurch gekennzeichnet, dass das Schaltorgan (6) in Wenigstens zwei entlang der Bahn angeordnete Teile (6a, 6b) geteilt ist, und derart schaltbar ist, dass wahlweise mit dem einen oder dem anderen zuschaltbaren Teil (6a, 6b) ein im Bereich der Entladestation befindlicher Lastträger (1) zum Entladen betätigbar ist.

2. Einrichtung nach Anspruch 1, dadurch gekennzeichnet, dass wenigstens einer der Teile (6a, 6b) des geteilten Schaltorgans (6) entlang der Bahn (2) und/oder bezüglich seiner Neigung verstellbar ist.

3. Einrichtung nach Anspruch 2, dadurch gekennzeichnet, dass der verstellbare Teil (6a, 6b) eine verstellbare Kulisse (8, 9) aufweist.

4. Einrichtung nach einem der Ansprüche 1 bis 3, dadurch gekennzeichnet, dass die beiden Teile (6a, 6b) des geteilten Schaltorgans (6) nebeneinander und in Längsrichtung der Bahn (2) versetzt angeordnet sind.

5. Einrichtung nach einem der Ansprüche 1 bis 4, dadurch gekennzeichnet, dass die beiden Teile (6a, 6b) jeweils eine Kulisse (8, 9) aufweisen, auf welche in der aktiven Stellung eine Rolle (44) aufläuft.

6. Einrichtung nach Anspruch 5, dadurch gekennzeichnet, dass eine Kulisse (8, 9) in Längsrichtung der Bahn (2) gesehen nach rechts und die andere nach links jeweils zwischen einer aktiven und einer inaktiven Stellung verschwenkbar oder verschiebbar ist.

7. Einrichtung nach einem der Ansprüche 1 bis 6, dadurch gekennzeichnet, dass die Lastträger (1) Wagen sind, die wenigstens eine neigbare Tragschale (16, 17) aufweisen.

8. Einrichtung nach einem der Ansprüche 1 bis 7, dadurch gekennzeichnet, dass die Lastträger (1) wagen sind, die jeweils zwei in Fahrrichtung hintereinander angeordnete Tragschalen (16, 17), sowie für jede Tragschale ein Betätigungsorgan (38) aufweisen, derart, dass an der Entladestation die beiden Tragschalen (16, 17) im wesentlichen gleichzeitig oder nacheinander mit zwei entlang der Bahn (2) beabstandeten Schaltorganen (6, 7) oder mit dem geteilten Schaltorgan (6) zum Entladen neigbar sind.

9. Verwendung der Einrichtung nach einem der Ansprüche 1 bis 9, zum Füllen von einem Stauband (5) mit Stückgütern (3, 4).

## Claims

1. A conveying device hating load carriers (1) which can swivel about an axis which runs in the direction of conveying, which can be moved along an endless track (2), and which can be unloaded at at least one unloading station, having at least one switching element (6) which is disposed at the unloading station and which can be switched between an inactive and an active state for actuating the load carriers, characterised in that the switching element (6) is divided into at least two parts (6a, 6b) disposed along the track, and can be switched in such a way that a load carrier (1) situated in the region of the unloading station can be actuated for unloading with one or the other switchable part (6a, 6b) according to choice.

2. A device according to claim 1, characterised in that at least one of the parts (6a, 6b) of the divided switching element (6) is adjustable along the track (2) and/or with respect to its inclination.

3. A device according to claim 2, characterised in that the adjustable part (6a, 6b) comprises an adjustable connecting link (8, 9).

4. A device according to any one of claims 1 to 3, characterised in that the two parts (6a, 6b) of the divided switching element (6) are disposed side by side and offset in the longitudinal direction of the track (2).

5. A device according to any one of claims 1 to 4, characterised in that the two parts (6a, 6b) each comprise a connecting link (8, 9) on which a roller (44) impinges in the active position.

6. A device according to claim 5, characterised in that, as seen in the longitudinal direction of the track (2), one connecting link (8, 9) can be swivelled or displaced to the right and the other can be swivelled or displaced to the left, between an active and an inactive position in each case.

7. A device according to any one of claims 1 to 6, characterised in that the load carriers (1) are carriages which comprise at least one tiltable carrier tray (16, 17).

8. A device according to any one of claims 1 to 7, characterised in that the load carriers (1) are carriages, which each comprise two carrier trays (16, 17) disposed in series in the direction of travel, and which also comprise an actuating element (38) for each carrier tray, so that at the unloading station the two carrier trays (16, 17) can be tilted for unloading substantially simultaneously or in succession by two switching elements (6, 7) spaced apart along the track (2) or by the divided switching element (6).

9. The use of the device according to any one of claims 1 to 9 for filling an accumulation belt with unit loads.

## Revendications

1. Convoyeur muni de porte-charges (1) pivotant autour d'un axe s'étendant dans la direction de transport, qui peuvent être déplacés sur une trajectoire dans fin (2) et qui peuvent être déchargés au niveau d'au moins un poste de déchargement, comprenant au moins un organe de commande (6) placé au niveau du poste de déchargement, qui peut être commuté entre un état inactif et un état actif pour actionner les porte-charges, caractérisé en ce que l'organe de commande (6) est divisé en au moins deux parties (6a, 6b) disposées le long de la trajectoire et peut être commuté de manière à permettre d'actionner un porte-charge (1) situé dans la zone du poste de déchargement avec l'une ou l'autre des parties (6a, 6b), au choix, afin de procéder à son déchargement.

2. Dispositif selon la revendication 1, caractérisé en ce qu'au moins l'une des parties (6a, 6b) de l'organe de commande divisé (6) peut être réglée le long de la trajectoire (2) et/ou du point de vue de son inclinaison.

3. Dispositif selon la revendication 2, caractérisé en ce que la partie réglable (6a, 6b) présente une coulisse réglable (8, 9).

4. Dispositif selon l'une des revendications 1 à 3, caractérisé en ce que les deux parties (6a, 6b) de l'organe de commande divisé (6) sont disposées côte à côte et de façon décalée dans la direction longitudinale de la trajectoire (2).

5. Dispositif selon l'une des revendications 1 à 4, caractérisé en ce que les deux parties (6a, 6b) présentent chacune une coulisse (8, 9) sur laquelle se déplace un galet (44) lorsque celle-ci est en position active.

6. Dispositif selon la revendication 5, caractérisé en ce que, vu dans la direction longitudinale de la trajectoire (2), une coulisse (8, 9) peut pivoter ou être déplacée vers la droite entre une position active et une position inactive et l'autre coulisse, vers la gauche.

7. Dispositif selon l'une des revendications 1 à 6, caractérisé en ce que les porte-charges (1) sont des chariots qui présentent au moins une coupe inclinable (16, 17).

8. Dispositif selon l'une des revendications 1 à 7, caractérisé en ce que les porte-charges (1) sont des chariots qui présentent chacun deux coupes (16, 17) disposées l'une derrière l'autre dans la direction de déplacement, et un organe d'actionnement (38) pour chaque coupe, de manière à ce qu'au niveau du poste de déchargement, les deux coupes (16, 17) destinées à être déchargées puissent être inclinées essentiellement simultanément ou l'une après l'autre à l'aide de deux organes de commande (6, 7) espacés le long de la trajectoire (2) ou à l'aide de l'organe de commande divisé (6).

9. Mise en oeuvre du dispositif selon l'une des revendications 1 à 9 pour garnir de marchandises (3, 4) une bande à accumulation (5).
